(19)

**Europäisches Patentamt**
**European Patent Office**
**Office européen des brevets**

(11) **EP 3 051 474 A1**

(12) **EUROPEAN PATENT APPLICATION**

(43) Date of publication:
**03.08.2016 Bulletin 2016/31**

(51) Int Cl.:
***G06Q 10/10*** *(2012.01)*

(21) Application number: **16151158.9**

(22) Date of filing: **13.01.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.01.2015 US 201514607739**

(71) Applicant: **Xerox Corporation
Rochester, NY 14644 (US)**

(72) Inventors:
- **WILLAMOWSKI, Jutta Katharina
38000 Grenoble (FR)**
- **MAZZEGA, Matthieu
38000 Grenoble (FR)**
- **HOPPENOT, Yves
38220 Notre Dame de Message (FR)**
- **GRASSO, Maria Antonietta
38000 Grenoble (FR)**

(74) Representative: **Gill Jennings & Every LLP
The Broadgate Tower
20 Primrose Street
London EC2A 2ES (GB)**

(54) **SYSTEM AND METHOD FOR THE CREATION AND MANAGEMENT OF USER-ANNOTATIONS ASSOCIATED WITH PAPER-BASED PROCESSES**

(57)    A computer-implemented method for identifying constraints to reducing consumable usage includes acquiring print job information for a set of print jobs submitted for printing by a set of users. A print job representation is computed for each of the print jobs from the print job information. Provision is made for user-annotation of a note associated with the submitted print jobs including a reason for printing the print job. User-annotations are received for at least some of the submitted print jobs. The print jobs may be clustered into clusters based on the print job representations and annotations. A representation of the set of print jobs includes a user dashboard and a group dashboard is generated which is based on the users' annotations and other users' included in a group to provide a structure for collaboration among the group members to identify the constraints to reducing consumable usage and/or provide solutions to reduce consumable usage.

FIG. 1

## Description

BACKGROUND

The exemplary embodiment relates to creating and managing information associated with documents being processed and finds particular application in connection with a system and method for providing a structure to create and compile user-annotated notes associated with print jobs, the notes including a textual description of the reason(s) for printing the print jobs and/or provides solutions to reduce the consumption of consumables associated with printing the print jobs. This enables modifications to business processes to reduce paper usage.

In many contexts, such as the service industry, work is generally organized into processes that often entail printing documents. There is a growing trend towards replacing printing paper documents with digital counterparts, which may entail use of electronic signatures, email (instead of post mail) and online form filling. There are many reasons for this change, including higher productivity, cost-efficiency, and becoming more environmentally-friendly. Many large organizations are therefore looking for solutions to reduce paper usage and to move from using paper to digital documents. Unfortunately, especially in large organizations, it is often difficult to achieve this goal, because of a lack of information. Those in management, for example, often do not have a detailed understanding of where paper is being used by company employees, in particular, in which tasks or subtasks paper documents are generated, as well as how much paper is used in the process, in terms of the volume of paper being used in each of these tasks. Nor is there a good understanding of the reasons why paper is used for these tasks, i.e., what are the barriers that prevent using digital versions instead of paper documents within these tasks.

Having answers to these questions would help organizations to select which processes/tasks could be modified to facilitate moving them from paper to digital. However, without a good understanding of the paper consumption of the various tasks, and the reasons for printing documents, it is difficult to focus these efforts on the processes where changes would be the most effective.

The reasons for printing documents are often task dependent. Some common reasons involve requiring signatures, archiving, transitions between different computer systems, crossing organizational barriers, and so forth. However, there may be other reasons that have not been identified by the organization. To move from paper to digital, appropriate solutions may need to be implemented to replace the functions previously provided through generating paper documents, such as digital archiving, digital signatures, and the like. However, for some tasks, paper may afford benefits that digital documents do not provide. Paper is, for example, easy portable (e.g., when traveling), easy to read and annotate, and easy to hand over to another person. Employees could be provided with portable devices, such as eReaders, to address some of these issues, but this solution may not be cost-effective.

Currently, the transition from paper to digital is mainly achieved based on either ethnographic studies or consultancy: in these approaches typically an expert is sent to the site of the organization in order to study the existing work processes and to analyze these processes and the related tasks and constraints. In one study, management assumed that the paper consumption in the office was excessive and not really required for the work carried out by the employees. The extensive study carried out by ethnographers on site tended to disprove the assumption, but was time consuming to implement. See, Jacki O'Neill, David Martin, Tommaso Colombino, Antonietta Grasso, "A Little Knowledge is a Dangerous Thing?", CHI 2011--Conference on Human Factors in Computing Systems--Vancouver BC, Canada, May 2011.

There remains a need for a system and method for associating different tasks within an organization with corresponding paper usages and usage rationales, so that candidate solutions can be evaluated and implemented efficiently.

INCORPORATION BY REFERENCE

O'NEILL et al, "WHEN A LITTLE KNOWLEDGE ISN'T A DANGEROUS THING" CHI 2011 - Conference on Human Factors in Computing Systems - Vancouver BC, Canada, 7-12 May 2011, is incorporated herein by reference in its entirety.

BRIEF DESCRIPTION

In one embodiment of this disclosure, described is a method for identifying constraints on reducing consumable usage comprising: acquiring print job information for a set of print jobs submitted for printing by a set of users, each print job including a document to be printed; generating a print job contextual representation for each of the print jobs; providing for user-annotation of the submitted print jobs with a user-annotated note expressing a reason for printing the print job; receiving user-annotations for at least some of the submitted print jobs; and generating a user dashboard for each of the set of users, the user dashboard displaying the user's print consumption history, the set of users print consumption history and one or more received user-annotated notes for the set of users, wherein the generating a print job contextual representation, providing for user-annotations of a note, receiving user-annotated notes, and generating a user dashboard is performed with a computer processor.

In another embodiment of this disclosure, described is a system for identifying constraints on reducing consumable usage comprising: a job tracking component for acquiring print job information for a set of print jobs submitted for printing by a set of users, each print job including a document to be printed; a print job contextual representation generation component for generating a print job contextual representation for each of the print jobs; an annotation component for receiving user-annotations for at least some of the submitted print jobs, the user user-annotations including a user-annotated note expressing a reason for printing the print job; an analysis component for generating a representation of the set of print jobs which represents reasons for printing of print jobs based on the users' annotations; a user dashboard component for generating a user dashboard for each of the set of users, the user dashboard displaying the user's print consumption history, the set of user's print consumption history and one or more user annotated notes for the set of users; and a processor which implements the job tracking component, print job contextual representation annotation component, analysis component, and user dashboard component.

In still another embodiment of this disclosure, described is a method for identifying constraints on reducing consumable usage comprising: acquiring print job information for a set of print jobs submitted for printing by a set of users, each print job comprising a document to be printed; computing a print job representation for each of the print jobs based on features extracted from the print job information, the features including a statistical representation of low-level features extracted from patches of a page of the document; receiving user-annotations for at least some of the submitted print jobs whereby submitted print jobs are annotated with a user annotated note expressing a reason for printing the print job; partitioning the print jobs into clusters based on the print job representations and annotations; and generating a representation of the set of print jobs which represents reasons for printing of print jobs in at least one of the clusters, based on the users' c annotations, wherein the computing of the print job representation, receiving user-annotations, partitioning the print jobs, and generating of the representation of the set of print jobs are performed with a computer processor.

BRIEF DESCRIPTION OF THE DRAWINGS

FIGURE 1 is a graphical overview of a system and method for analyzing task-related printing;
FIGURE 2 is functional block diagram of a system for analyzing task-related printing in accordance with one aspect of the exemplary embodiment;
FIGURE 3 is flow chart of a system for analyzing task-related printing in accordance with another aspect of the exemplary embodiment;
FIGURE 4 is an example of a prompt to a user to create a note on the fly according to an exemplary embodiment of this disclosure.
FIGURE 5 is an example of a user note created on the fly according to an exemplary embodiment of this disclosure.
FIGURE 6 is an example of a system generated visual indicator to a user highlighting a particular consumption pattern with an associated timeline according to an exemplary embodiment of this disclosure.
FIGURE 7 is an example of a user dashboard according to an exemplary embodiment of this disclosure.
FIGURE 8 illustrates a structure of a user dashboard according to an exemplary embodiment of this disclosure.
FIGURE 9 is an example of a user dashboard including a note pan (bottom left) and a textual pattern description (bottom right) according to an exemplary embodiment of this disclosure.
FIGURE 10 is an example of an added user note according to an exemplary embodiment of this disclosure.
FIGURE 11 is an example of a group dashboard according to an exemplary embodiment of this disclosure.
FIGURE 12 is an example of a filtering pan according to an exemplary embodiment of this disclosure.

DETAILED DESCRIPTION

As discussed in the background section, companies want to reduce paper usage but lack a detailed understanding of the various paper-based processes and printing requirements in place within their companies. Company employees who are actually carrying out the work are confronted daily with these paper-based processes, are in the best position to identify existing pain points with respect to paper usage and printing and to elaborate realistic process improvement options to reduce paper usage. Companies thus need a way to enable, engage and motivate their employees to contribute, and to provide their input into such a dedicated "collaborative process improvement suggestion box".

A system and method are disclosed that analyze document printing in a way which enables informed decisions to be made by decision-makers, such as managers and other organization individuals, to support an effective move from printed paper to digital documents.

Specifically, a note-taking management system and method is disclosed based on the creation, the structuration and the management of employee annotations addressing processes limits and/or suggesting improvements regarding printing and paper usage.

More specifically, an exemplary system and method provides the following functionality:

1. Identifying employees' typical, atypical, and/or particularly costly printing consumption patterns from their long and short term print history

2. Pointing out those patterns to users, prompting and motivating them to take semi-structured notes on their printing behaviors and paper usage issues though two distinct procedures:

a. On the fly: right after issuing a print job, the systems prompts users for a note.
b. A posteriori: the system confronts the user with a high-level textual description and graphic visualization of the detected pattern and prompts users to respond with an explaining note.

In both cases the system associates the note taken by the user with its context, e.g., the corresponding print job with its meta-data or the particular consumption pattern, for instance typically heavy color printing toward the end of the month period.

3. Sharing contextualized notes with peers. Peers can thus review and support each other's notes. The system therefore displays each note with its corresponding context, i.e., type of job, printing pattern, etc., in a personal dashboard.

4. Facilitating peer group discussions by assembling and aggregating all the notes taken into a group dashboard. The group dashboard facilitates grouping notes according to different attributes, i.e., type of user, type of print job, print settings used, etc., in order to elaborate acceptable improvement suggestions.

Overall, the provided system and method covers the entire process from detecting employee's printing patterns to gathering employee notes in response, elaborated in group discussion(s) to finally identifying viable process improvement suggestions.

Experiments have demonstrated that employees are motivated to give feedback on their printing pain points and to elaborate and adopt improvements to reduce paper usage wherever possible. This behavior was observed typically whenever individuals owned a corresponding workflow and when this workflow was of limited complexity. Such an individual approach is not possible for more complex workflows that are often put in place by an employer and involve several employees. In such cases, it is more difficult if not impossible for the individual alone to fully grasp and assess the root causes and constraints for paper usage, and, much less, to propose an appropriate solution or process improvement.

Therefore, prompting employees for information, followed by a discussion with colleagues can be a key enabler to clarify issues and to elaborate appropriate solutions. Indeed, different employees see an issue under different perspectives and a joint discussion has the benefit of crystallizing its description and also to more precisely specify its characteristics (e.g., in terms of the workflow concerned, its frequency, the volume generated, etc.). Group discussions also foster the individuals' contributions with respect to what constitutes an appropriate, realistic and acceptable improvement of the concerned paper-based workflow. Valuing the individuals' contributions will in turn encourage them to actively participate in the suggestion process continuously over time.

Provided herein is a system and method supporting the entire process: from individual's annotation of pain points to collective discussion and solutions. Concerning the note taking, the system disclosed lets individual employees take notes either on the fly (when carrying out the work, and printing) or a posteriori, based on a textual description and graphic visualization of print history information. Individuals then share their notes within their peers. Peer groups finally use the system to frame and characterize issues raised by user notes and then appropriate solutions based on the individual's notes.

According to another aspect of this disclosure, an exemplary method identifies recurring paper-based tasks by storing and analyzing print logs, estimates the impact of each task in terms of consumable usage, such as in terms of paper volume and/or power consumption, and identifies constraints that explain the reasons for printing, allowing identification of the barriers that prevent moving these tasks from paper to digital form.

A digital document includes one or more digital pages in electronic form. Document printing refers to the rendering of a digital document in hardcopy, e.g., paper form. Document printing may be quantified in terms of usage of one or more consumables employed in the output of printed documents.

Example consumables consumed in printing include print media, e.g., paper; marking materials, such as inks or toners; energy consumed by an output device, such as a printer, or the like in the rendering of a digital document in hardcopy, or a combination thereof. In the exemplary embodiment, usage of the consumable is quantified, at least in part, in terms of an amount of paper used in printing a document, such as a number of sheets of paper or a volume or weight of paper used (allowing different sizes and/or densities of the sheets to be accounted for), although other quantifiable measures may be employed, such as units of electric power consumed in printing (which may take into account that different printers/printing modes consume different amounts of energy), weight or volume of marking material (e.g., based on degree of coverage of each page, or an estimated average consumed per page), or by computing an overall cost per digital page printed, which may factor in type of print medium (e.g., bond vs. regular paper), whether monochrome or color printing is used, which of a plurality of printers is used in printing (where each printer has a different energy consumption), whether duplex or simplex printing is employed, or a combination of these and/or other factors directly or indirectly related to the quantity of one or more consumables used.

Each digital document can be in any convenient file format for printing, such as Word, PowerPoint, Spreadsheet, JPEG, Graphics Interchange Format (GIF), JBIG, Windows Bitmap Format (BMP), Tagged Image File Format (TIFF), JPEG File Interchange Format (JFIF), Delrin Winfax, PCX, Portable Network Graphics (PNG), DCX, G3, G4, G3 2D, Computer Aided Acquisition and Logistics Support Raster Format (GALS), Electronic Arts Interchange File Format (IFF), IOCA, PCD, IGF, ICO, Mixed Object Document Content Architecture (MO:DCA), Windows Metafile Format (WMF), ATT, BRK, CLP, LV, GX2, IMG(GEM), IMG(Xerox), IMT, KFX, FLE, MAC, MSP, NCR, Portable Bitmap (PBM), Portable Greymap (PGM), SUN, PNM, Portable Pixmap (PPM), Adobe Photoshop (PSD), Sun Rasterfile (RAS), SGI, X BitMap (XBM), X PixMap (XPM), X Window Dump (XWD), AFX, Imara, Exif, WordPerfect Graphics Metafile (WPG), Macintosh Picture (PICT), Encapsulated PostScript (EPS), combination thereof, or other common file format used for documents. In general, each page of the document may include one or more of text, raster graphics, and images, each image including image data, e.g., as an array of pixels.

A print job generally includes a printing object, which includes the digital document to be printed in a format recognized by the selected printer, e.g., Postscript, together with a job ticket, which provides information about the print job that will be used to control how the job is processed, such as number of copies, double or single sided printing, color or monochrome printing, paper type, specific printer selected, and so forth.

Print logs are records of print jobs that have been printed on a printer (or which are being sent for printing on a printer) and which contain information about the print jobs, such as the document name, user ID, image data for each page of the document, job ticket information, and so forth.

A task, as used herein, can be any function which entails generating a record of a document in at least one of digital and paper form and which is performed repeatedly by at least one and generally by multiple people within an organization. More particularly, in the exemplary embodiment, a task can be defined in terms of a cluster of similar documents, one or more of which may have been manually assigned a task label selected from a set of task labels. Document similarity can be determined based on one or more document features, as described in further detail below. The manually assigned task labels may be assigned by a user, such as a person who has selected a particular document for printing, or, in some cases, the user may be another person, who reviews the documents that have been printed or associated stored information, e.g., derived from the print logs.

The information generated in the exemplary method can assist management in taking appropriate and informed decisions, select the tasks that matter most in terms of consumable usage, and remove the corresponding barriers that prevented the move from paper to digital, for example, by investing in and modifying the organization's infrastructure and modifying business processes accordingly.

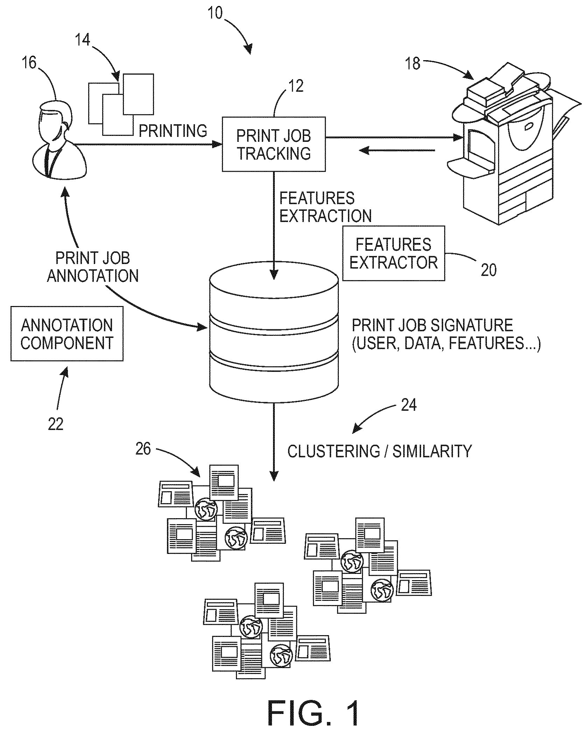

With reference to FIG. 1, an overview of an exemplary print analysis system 10 and method is shown. The exemplary system 10 tracks users' print jobs and computes features for some or all of them. It then combines print job representations and user annotations of print jobs to provide information about paper based tasks, the consumables they represent, and the reasons why they are required in paper format.

The system 10 includes a print job tracking component 12 that intercepts print jobs 14 that are sent by different users 16 within the organization to a printing infrastructure 18 (and/or which receives information on the print jobs from the printing infrastructure, such as print logs). The number of users and print jobs is not limited but may include at least 2 or at least 5, or at least 10 and up to 100 or more users, each generating one or more print jobs for printing on the printing infrastructure 18, for example, over a selected time period, such as a day, week, month, or the like. In the exemplary embodiment, the number of print jobs may be at least 10, or at least 100, or up to 1000 or more.

A features extractor 20 extracts and computes for each individual print job, a print job representation (or "signature") comprising a set of feature descriptors (such as a user ID, a printing date and time, a document title, a document length, visual and/or textual document content-based features, or a combination thereof). The print job signature can be a vectorial representation of information extracted from the print job.

An annotation component 22 provides for users 16 to annotate at least some of the print jobs 14 with: user-annotated note which relates to the constraints (reasons or barriers) as to why the corresponding document was considered beneficial to be printed or was required to be in paper rather than simply digital format.

An optional clustering component 24 identifies clusters 26 of similar print jobs 14. The clustering is based on the assumption that similar print jobs will belong to similar tasks and that users have work roles corresponding to a specific subset of tasks and thus print essentially the corresponding types of print jobs. Thus, print jobs which have no annotations can be clustered based on the similarity of their print job signatures to those of annotated jobs.

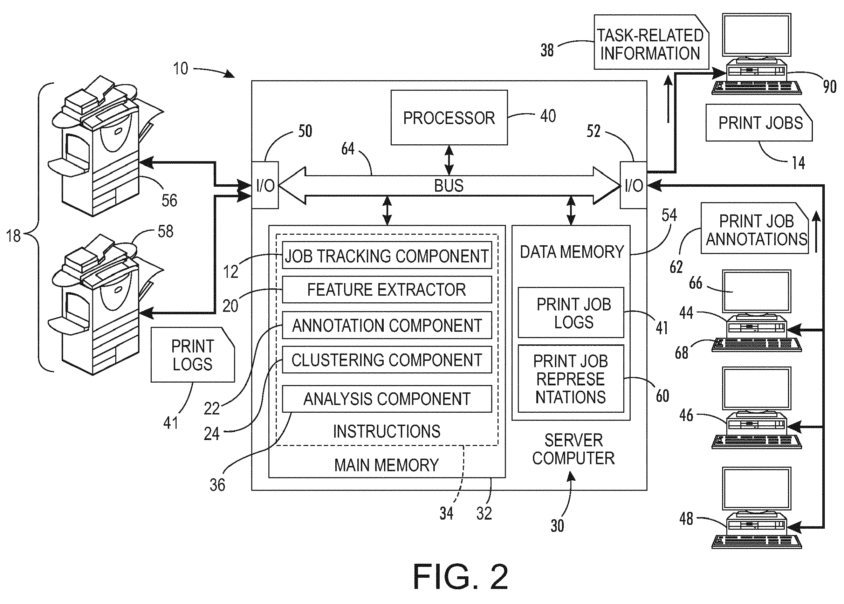

As illustrated in FIG. 2, the system 10 may suitably be hosted by one or more computing devices 30. For example, the system 10 includes main memory 32 which stores instructions 34 for performing the exemplary method, including the print job tracking component 12, features extractor 20, annotation component 22, and clustering component 24, described above with reference to FIG. 1.

An analysis component 36 generates task-related information 38, based on the clustering and annotations, which is output from the system 10. In the exemplary embodiment, the components 12, 20, 22, 26, 36 are in the form of software which is implemented by a computer processor 40 in communication with memory 32.

In the illustrated embodiment, the computing device 30 receives print job information comprising print jobs 14, and/or information extracted therefrom, such as print logs 41, via a network. In one embodiment the print jobs 14 are received by the job tracking component 12 from a plurality of client computing devices 44, 46, 48 linked to the network, that are used by the respective users 16 to generate print jobs. However, it is to be appreciated that print job information for the submitted print jobs 14 may alternatively or additionally be received from the printing infrastructure 18 or from a print job server (not shown), which distributes the print jobs 14 to the various printers in printing infrastructure 18. The print job information 14, 41 is received by the system 10 via one or more input/output (I/O) interfaces 50, 52 and stored in data memory 54 of the system 10 during processing. The computing device 30 also may control the distribution of the received print jobs 14 to respective printers 56, 58 of the printing infrastructure 18, or this function may be performed by another computer on the network.

The feature extractor 20 extracts features from the print job information. The extracted features are used to generate a representation 60 of each print job, which may be stored in memory 54.

The annotation component 22 receives, as input, print job annotations 62 for at least some of the print jobs 14, via the network, e.g., from the client computing devices 44, 46, 48 and stores the annotations, or information extracted from them, in memory 22. The annotations may include task-related information and/or information on constraints provided in the form of a note which limit or prevent the user's ability to use a digital version of the printed document rather than printing a paper copy. Alternatively, the task-related information may include a task category selected from a plurality of task categories, or information from which the task category may be inferred. The constraint-related information may include a constraint category selected from a plurality of constraint categories, or information from which the constraint category may be inferred.

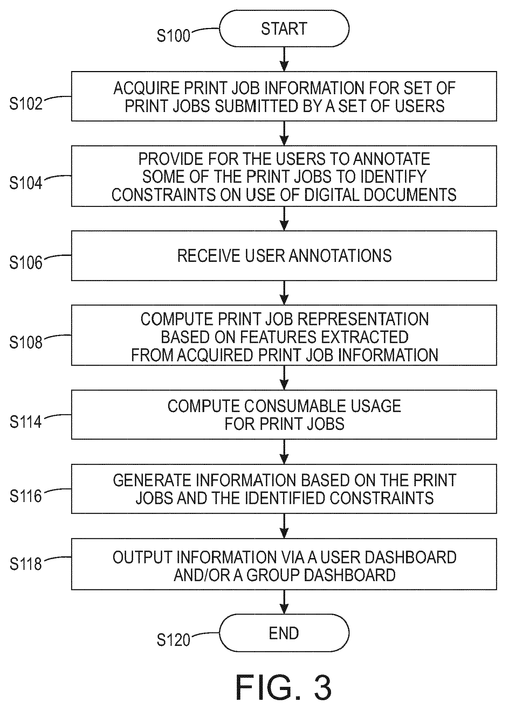

The clustering component 24 may be trained, on the annotated (labeled) print jobs and is then able to cluster a set of labeled and unlabeled print jobs into a plurality of clusters 26. Hardware components 32, 40, 50, 52, 54 may communicate via a data/control bus 64. The processor 40 executes the instructions for performing the method outlined in FIG. 3.

The client devices 44, 46, 48 may each communicate with one or more of a display 66, for displaying information to users, and a user input device 68, such as a keyboard or touch or writable screen, a cursor control device, such as mouse or trackball, a speech to text converter, or the like, for inputting text and for communicating user input information and command selections to the respective computer processor and to processor 40 via network.

The computer device 30 may be a PC, such as a server computer, a desktop, laptop, tablet, or palmtop computer, a portable digital assistant (PDA), a cellular telephone, a pager, combination thereof, or other computing device capable of executing instructions for performing the exemplary method.

The memory 32, 54 may represent any type of non-transitory computer readable medium such as random access memory (RAM), read only memory (ROM), magnetic disk or tape, optical disk, flash memory, or holographic memory. In one embodiment, the memory 32, 54 comprises a combination of random access memory and read only memory. In some embodiments, the processor 40 and memory 32 may be combined in a single chip. The network interface 50, 52 allows the computer 30 to communicate with other devices via a computer network 42, such as a local area network (LAN) or wide area network (WAN), or the internet, and may comprise a modulator/demodulator (MODEM) a router, a cable, and/or Ethernet port. Memory 32, 54 stores instructions for performing the exemplary method as well as the processed data 38.

The digital processor 40 can be variously embodied, such as by a single-core processor, a dual-core processor (or more generally by a multiple-core processor), a digital processor and cooperating math coprocessor, a digital controller, or the like. The exemplary digital processor 40, in addition to controlling the operation of the computer 30, executes instructions stored in memory 34 for performing the method outlined in FIG. 3.

The client devices 44, 46, 48 may be configured as for computing device 30, except as noted.

The term "software," as used herein, is intended to encompass any collection or set of instructions executable by a computer or other digital system so as to configure the computer or other digital system to perform the task that is the intent of the software. The term "software" as used herein is intended to encompass such instructions stored in storage medium such as RAM, a hard disk, optical disk, or so forth, and is also intended to encompass so-called "firmware" that is software stored on a ROM or so forth. Such software may be organized in various ways, and may include software components organized as libraries, Internet-based programs stored on a remote server or so forth, source code, interpretive code, object code, directly executable code, and so forth. It is contemplated that the software may invoke system-level code or calls to other software residing on a server or other location to perform certain functions.

As will be appreciated, FIG. 2 is a high level functional block diagram of only a portion of the components which are incorporated into a computer system 10. Since the configuration and operation of programmable computers are well known, they will not be described further.

With reference to FIG. 3, a method for analysis of the reasons for printing print jobs is shown, which can be performed with the system of FIG. 2. The method begins at S100.

At S102, print job information 14, 41 is acquired for a collection of print jobs generated by a set of users 16, such as company employees, and stored in computer memory 54.

At S104 provision is made for the employees 16 to annotate their print jobs, e.g., via a graphical user interface generated on the user's client device 44, 46, or 48. The annotations also include a user-annotated note which explains why the printing of the job was needed or beneficial.

At S106, user annotations 60 are received by the system 10 and stored in memory.

At S108, for each of a set of the print jobs, a print job representation 6260 is generated, which includes features extracted from the print job information received at S102.

At S114, consumable usage is computed, by the analysis component 36, for the print jobs in the clusters. In one embodiment, the number of pages in each print job in the set of submitted jobs is stored in memory and the total number of print job pages is computed for the print jobs.

At S116, information is generated based on the user annotated notes, such as a representation of the constraints and/or features for the print jobs.

At S118, information 38 is output.

The method ends at S120.

The method illustrated in FIG. 3 may be implemented in a computer program product that may be executed on a computer. The computer program product may comprise a non-transitory computer-readable recording medium on which a control program is recorded (stored), such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other non-transitory medium from which a computer can read and use.

Alternatively or additionally, the method may be implemented in transitory media, such as a transmittable carrier wave in which the control program is embodied as a data signal using transmission media, such as acoustic or light waves, such as those generated during radio wave and infrared data communications, and the like.

The exemplary method may be implemented on one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like. In general, any device, capable of implementing a finite state machine that is in turn capable of implementing the flowchart shown in FIG. 3, can be used to implement the method. As will be appreciated, while the steps of the method may all be computer implemented, in some embodiments one or more of the steps may be at least partially performed manually.

Further details of the system and method will now be described.

Print Job Tracking (S102)

Print job tracking systems that provide the basic functionality of the exemplary print job tracking component 12, such as intercepting print jobs issued through a print infrastructure 18 and extracting the corresponding user name, document title, document length, and similar information are readily available. For example, a device management program, such as the Xerox Device Manager (XDM), accessible through Xerox CentreWareWeb.TM., can be installed in a printer network. Such a monitoring system 12 is able to mine information regarding print jobs as well as to intercept data to be printed and to store it in the form of a PDF/PS file.

The functionality of such a system can be enhanced with instructions to compute additional features, such as visual or textual document content and/or layout from the print jobs that will also allow taking into account the layout and content of the printed documents. This can be performed by rendering the page description language (PDL) document and then applying OCR or visual feature extraction to one or more of the rendered document pages. The features extracted can then be used in computing a word-based, or image feature based representation of the document page. Other features can be based on color or black & white pixels coverage which helps to estimate the type of document: drawing, text or graphics. These representations, or features extracted therefrom, can serve as features of the print job representation.

Feature Extraction (S108)

Exemplary features used in clustering the print jobs can be selected from:

1. User ID, such as the user name of the user submitting the print job for printing.
2. Print job submission time.
3. Document title, which may be extracted from the filepath of the document.
4. Document length, which may be expressed in terms of a number of sheets in the job being printed.
3. Print job type selected from a predefined set of job types (e.g., selected from Email; spreadsheet, such as Excel; graphics; PDF; PowerPoint; RTF; Text; drawing program, such as Visio or Chemdraw; Web page; Word, other).
4. Textual content features, such as word frequencies of each of a selected set of words, extracted from the title and/or content of the printed document.
5. Visual content features, such as features based on color and/or gradient of pixels of patches of a document page image.
6. Coverage features, such as the number/proportion of pixels which are "on" (having a color) or the number/proportion of pixels of each of the color separations (e.g., C, M, Y, and optionally K).

In some embodiments, at least two, or at least three, or at least four, or all of these feature types is extracted for each print job. Some of the features may be generated by the job tracking component, as discussed above. Other features may be extracted by the feature extractor. The feature values acquired by the job tracking component, and/or feature extractor, may each be normalized to a common range of values, such as 0-1. The print job representation as a whole may also be normalized so the values sum to 1, or some other normalization is performed. Some of the features may be weighted, in the print job representation, to reflect their relative importance, although the clustering component may also learn which features are most important for clustering the jobs and weight them accordingly.

For generating print job type features, each print job type may be a separate feature in the representation and a value of 1 can be accorded if the job is of that type, 0 otherwise.

For extracting a document title from a filepath, the document title may be taken from the last forward slash to the final period. In other embodiments, the title may be stored as metadata, or in other information associated with the document. The identified document title may be split into words and a histogram representation generated of the words that it contains. The histogram may represent a limited set of words, such as those expected to be found in document titles, and may exclude stop words which are too frequent to be discriminative.

Methods for extracting features from text are described, for example, in U.S. Pub. No. 20100070521, published Mar. 18, 2010, entitled QUERY TRANSLATION THROUGH DICTIONARY ADAPTATION, and U.S. Pub. No. 20100082615, published Apr. 1, 2010, entitled CROSS-MEDIA SIMILARITY MEASURES THROUGH TRANS-MEDIA PSEUDO-RELEVANCE FEEDBACK AND DOCUMENT RERANKING, both by Stephane Clinchant, et al., the disclosures of which are incorporated herein by reference in their entireties. The representation can be a bag-of-words representation which is based on the number of occurrences of each of a set of words in the document page or set of pages.

For generation of an image representation of one or more pages of the document to be printed, the feature extractor may generate any suitable high level statistical representation of an image constituted by the document page or part thereof, such as a multidimensional vector generated based on features extracted from the image. Fisher Kernel representations and Bag-of-Visual-Word representations are exemplary of suitable high-level statistical representations which can be used herein. The exemplary representations are of a fixed dimensionality, i.e., each image signature has the same number of elements.

For example, the feature extractor 20 includes a patch extractor, which extracts and analyzes low level visual features of patches of the image, such as shape, texture, or color features, or the like. The patches can be obtained by image segmentation, by applying specific interest point detectors, by considering a regular grid, or simply by the random sampling of image patches. In the exemplary embodiment, the patches are extracted on a regular grid, optionally at multiple scales, over the entire image, or at least a part or a majority of the image.

The extracted low level features (in the form of a local descriptor, such as a vector or histogram) from each patch can be concatenated and optionally reduced in dimensionality, to form a features vector which serves as the global image signature. In other approaches, the local descriptors of the patches of an image are assigned to clusters. For example, a visual vocabulary is previously obtained by clustering local descriptors extracted from training images, using for instance K-means clustering analysis. Each patch vector is then assigned to a nearest cluster and a histogram of the assignments can be generated. In other approaches, a probabilistic framework is employed. For example, it is assumed that there exists an underlying generative model, such as a Gaussian Mixture Model (GMM), from which all the local descriptors are emitted. Each patch can thus be characterized by a vector of weights, one weight for each of the Gaussian functions forming the mixture model. In this case, the visual vocabulary can be estimated using the Expectation-Maximization (EM) algorithm. In either case, each visual word in the vocabulary corresponds to a grouping of typical low-level features. The visual words may each correspond (approximately) to a mid-level image feature such as a type of visual (rather than digital) object (e.g., ball or sphere, rod or shaft, flower, autumn leaves, etc.), characteristic background (e.g., starlit sky, blue sky, grass field, snow, beach, etc.), or the like. Given an image to be assigned a representation, each extracted local descriptor is assigned to its closest visual word in the previously trained vocabulary or to all visual words in a probabilistic manner in the case of a stochastic model. A histogram is computed by accumulating the occurrences of each visual word. The histogram can serve as the image representation or input to a generative model which outputs an image representation based thereon.

For example, as local descriptors extracted from the patches, SIFT descriptors or other gradient-based feature descriptors, can be used. See, e.g., Lowe, "Distinctive image features from scale-invariant keypoints," IJCV vol. 60 (2004). In one illustrative example employing SIFT features, the features are extracted from 32.times.32 pixel patches on regular grids (every 16 pixels) at five scales, using 128-dimensional SIFT descriptors. Other suitable local descriptors which can be extracted include simple 96-dimensional color features in which a patch is subdivided into 4.times.4 sub-regions and in each sub-region the mean and standard deviation are computed for each of the channels (e.g., three: R, G and B, in the case of color documents, or a single channel in the case of monochrome images). These are merely illustrative examples, and additional and/or other features can be used. The number of features in each local descriptor is optionally reduced, e.g., to 64 dimensions, using Principal Component Analysis (PCA). Signatures can be computed for two or more regions of the image and aggregated, e.g., concatenated.

In some illustrative examples, a Fisher vector is computed for the image by modeling the extracted local descriptors of the image using a mixture model to generate a corresponding image vector having vector elements that are indicative of parameters of mixture model components of the mixture model representing the extracted local descriptors of the image. The exemplary mixture model is a Gaussian mixture model (GMM) comprising a set of Gaussian functions (Gaussians) to which weights are assigned in the parameter training. Each Gaussian is represented by its mean vector, and covariance matrix. It can be assumed that the covariance matrices are diagonal. See, e.g., Perronnin, et al., "Fisher kernels on visual vocabularies for image categorization" in CVPR (2007). Methods for computing Fisher vectors are more fully described in U.S. Pub. No. 20120045134, published Feb. 23, 2012 entitled LARGE SCALE IMAGE CLASSIFICATION, by Florent Perronnin, et al., and U.S. Pub. No. 20120076401, published Mar. 29, 2012, entitled IMAGE CLASSIFICATION EMPLOYING IMAGE VECTORS COMPRESSED USING VECTOR QUANTIZATION, by Jorge Sanchez, et al., and in Jorge Sanchez, and Thomas Mensink, "Improving the fisher kernel for large-scale image classification," in Proc. 11.sup.th European Conference on Computer Vision (ECCV): Part IV, pages 143-156 (2010); Perronnin, F. and Liu, Y. and Sanchez, J. and Poirier, H., "Large-scale image retrieval with compressed fisher vectors," in Proc. of Computer Vision and Pattern Recognition (CVPR), pp. 3384-3391, 2010; and Jorge Sanchez and Florent Perronnin, "High-dimensional signature compression for large-scale image classification," in CVPR 2011, the disclosures of which are incorporated herein by reference in their entireties. The trained GMM is intended to describe the content of any image within a range of interest (for example, different types of document pages, including images, text, emails, and the like).

Other methods of generating image representations which can be used as features herein are described in U.S. Pub. Nos. 20030021481; 2007005356; 20070258648; 20080069456; 20080240572; 20080317358; 20090144033; 20090208118; 20100040285; 20100082615; 20100092084; 20100098343; 20100189354; 20100191743; 20100226564; 20100318477; 20110026831; 20110040711; 20110052063; 20110072012; 20110091105; 20110137898; 20110184950; 20120045134; 20120076401; 20120143853, and 20120158739, the disclosures of which are incorporated herein by reference in their entireties.

Annotation of Print Jobs (S104, S106)

At S104, a user annotatable note is presented to the user to capture the reasons for the print job.

In the exemplary embodiment, fewer than all of the print jobs in the set are annotated with notes. In some embodiments, a user may be permitted/chose to apply a task note but no constraint note, or vice versa. In other embodiments, the user may be required to/choose to apply both a task note and constraint note when annotating a print job.

The annotation can be made easy for the employees. For example, annotation may form a part of their recognized usual activity, or they may be provided with an incentive to annotate print jobs (such as an increase in their printing quota). In some embodiments, annotating documents allows them to access a more informative visualization of their printing history, e.g., through a Personal Assessment Tool (PAT), as described in copending U.S. Pub. Nos. 20110273739 and 20120033250 and U.S. application Ser. No. 13/774,020, filed Feb. 22, 2013, the disclosures of which are incorporated herein by reference in their entireties.

Various procedures for annotation are contemplated which can be used individually or in combination. For example, the annotation process can be initiated spontaneously by the users or when requested by the system, for example, to use active learning in order to validate or refine the actual clustering. Users may annotate one (or a set of) selected print job(s), thereby associating it to a corresponding one of a set of tasks and identifying constraints on printing.

In another embodiment, the user may annotate a point in time or time frame with the task they were mainly performing at that time (e.g., reviewing papers for a conference, preparing for a customer visit, etc.) and the system identifies print jobs submitted during that time frame and associates them with that task.

In one embodiment, users can provide annotations when submitting print jobs. In this case, the annotations may be integrated into the existing printing selection process, e.g., within one of the already existing notification pop-up windows informing the user that his print job has been sent to or processed by the printer. In one study, it was shown that at least a significant portion of users would have been motivated to do so to pinpoint paper-based processes that should evolve to digital form (e.g., legal documents or forms requiring a signature).

Users can also provide annotations of print jobs or time frames at a later time from a print history view. In one embodiment, a graphical user interface which provides a Personal Assessment Tool (PAT), as described above, provides a print history view visualizing the user's print jobs over time. For example, the print history provides the document title and length. In addition, users may be provided with access to the visual document content, i.e. the document page images. From this information, users can associate a set of print jobs to the task to which they belong. Alternatively, users can specify a time frame and associate it to one or a set of tasks or to a particular event generating associated tasks. This indicates that the print jobs they initiated in this time frame correspond to the tasks they were primarily executing in that time frame.

It has been found that it is relatively easy to motivate at least a minimum number of users to participate in the annotation effort. Experiments with systems like the Personal Assessment Tool indicate that people will often be willing to provide annotation even if they will not gain any particular benefits for themselves. Also, the annotations provide the users with a method to make their work and barriers explicit to the management, which constitutes another incentive to annotate. It has been found that some people are annoyed about having to print documents and are therefore willing to provide spontaneous feedback about the nature of the print job and the reasons for submitting it.

In some embodiments, a reward may be provided to users who provide user-annotations for at least some of their respective submitted print jobs. For example, the system may motivate users to participate in the annotation effort by giving them a better or more detailed feedback about their printing behavior in relation to their participation in the annotation of print jobs. In one embodiment, users may initially be provided with only a basic breakdown of their print jobs, e.g., according to the applications used to launch them (or no breakdown at all), whereas once they have annotated a minimum number of print jobs, they are provided with a more detailed breakdown of their jobs according to corresponding identified tasks, optionally together with annotated constraints for paper usage. With an increasing number of annotations, this information may be displayed in more and more detail. In addition, the system may provide participating users with access to complementary information extracted from their print jobs and involved in the clustering, such as the most frequent words observed in the user's print jobs' document titles. The incentive for the user is to provide a limited amount of annotations to a community of users that will be used by the system to improve and refine the overall clustering and getting in return the benefit from all the annotations provided by the whole community of users. To encourage the user to provide even more annotations, the system may provide an incrementally improving breakdown. This means that to motivate the user, the system initially displays only a limited breakdown of information to the user, even if it could provide quite detailed information based on other users' prior annotations. The level of detail may thus increase with the number and value of the annotations provided.

In other embodiments, the users may be provided with one or more additional or alternative rewards, such as a cash payment, an increase in their print allocation, or other tangible or intangible rewards, as discussed, for example, in U.S. Pub. Nos. 20110273739 and 20120033250.

In the context of the PAT system, one suitable occasion to ask users to annotate some of their typical print jobs is during the self-assessment step: this is when users are reviewing their printing habits and will thus be naturally more inclined to provide annotations.

Print Job Clustering

According to an exemplary embodiment, the features extracted from the print jobs, such as the visual features associated to each print job, enable them to be automatically grouped into clusters. Each cluster can be considered as corresponding to a different task or note category. This helps to detect documents involved in the same process or task, since they are often associated with documents of similar structure. For example, it may be expected that documents associated with organizing travel (plane e-tickets, hotel reservations, travel map, etc.) or with the filing of intellectual property documents (invention disclosure, patent applications, copyright forms, publications) may occur more frequently in some groups than others. Recent development in document clustering techniques show that it is possible to deal with millions of documents using compressed image signatures, with no loss of accuracy compared to a precise description of the images. See, for example, Perronnin, F. and Liu, Y. and Sanchez, J. and Poirier, H., "Large-scale image retrieval with compressed fisher vectors," in Proc. Computer Vision and Pattern Recognition (CVPR), pp. 3384-3391, 2010.

Based on features that are extracted for each document and the subset of annotated documents, the annotation component 22 of the system learns clustering parameters for a set of clusters and propagates the labels to all the documents which have not yet been labeled. This may be performed using a supervised learning technique based on existing labels or a semi-supervised learning method. Exemplary methods for clustering are described, for example, in Seeger, M., "Learning with labelled and unlabelled data," (Technical Report), University of Edinburgh (2001), and Zhu, Xiaojin, John Lafferty, and Ronald Rosenfeld, "Semi-supervised learning with graphs," Diss. Carnegie Mellon University, Language Technologies Institute, School of Computer Science, 2005.

Example clustering algorithms which may be used herein include Nonnegative Matrix Factorization (NMF), Probabilistic Latent Semantic Analysis (PLSA), and Latent Dirichlet Allocation (LDA). See, for example, Lee, "Algorithms for nonnegative matrix factorization," Advances in Neural Information Processing Systems, 13:556-562, 2001; Hofmann, "Unsupervised learning by probabilistic latent semantic analysis," Machine Learning, 42(1/2):177-196, 2001; and Blei, et al., "Latent dirichlet allocation," J. Machine Learning Res., 3:993-1022, 2003, for a discussion of these techniques.

As an example, in PLSA, a mixture model may be used in which the probability of a print job representation $w$ given a label $u$ is expressed as a sum over a set of classes $z$ of the probability of the representation given a class and the probability of the class, given a label:

$$P_{LSA}(w|u) = \sum_z P(w|z;\theta)P(z|u;\pi)$$

where $\theta$ and $\pi$ (and optionally also the number N of clusters) are parameters to be learned, e.g., via log-likelihood maximization which optimizes the values of the parameters. This can be approximated by expectation maximization. In the expectation step, the probability that the occurrence of representation $w$ with label $u$ can be explained by cluster $z$ is computed given current values of the parameters.

$$P(z\,|\,u,w) = \frac{P(Z|u;\pi)P(w|z;\theta)}{\sum_{z\prime} P(Z'|u;\pi)P(w|z';\theta)}$$

In the maximization step, the parameters are re-estimated, based on the probabilities computed in the expectation step.

$$P\ (w|z,\theta) \propto \sum_u n(u,w)P(z|d,w),$$

where $n(u,w)P(z|d,w)$ represents how often representation $w$ is associated with class z, and

$$P\ (z|u,\pi) \propto \sum_w n(u,w)P(z|u,w)$$

where $n(u,w)P(z|u,w)$ represents how often label $u$ is associated with class z.

The two steps are iterated until convergence or until a stopping criterion is met.

The number of clusters may be predefined, e.g., in terms of an exact number of clusters or in terms of a maximum and/or minimum number of clusters. In other embodiments, the clustering algorithm is permitted to select an optimum number of clusters.

In the supervised case, the task labels as well as the print job representations are used in initial learning of the cluster parameters. In the semi-supervised case, the print jobs may be clustered based solely on the print job representations. The task labels are then used to refine the clusters, e.g., by merging two clusters which have print jobs having the same task labels.

Note that in this specific application, the goal of the clustering is to obtain clusters corresponding to print job tasks, but not to categories specific to the document content itself, since it is unlikely that the content will reoccur frequently. However, the structure of the document is often characteristic of a task that is repeated over time. It has been found that for some applications, a visual signature, based on image features, may be a more useful feature than the other suggested features for grouping documents, such as the time of printing, the user ID, or the OCR output containing the actual words of a document. For example, the distribution of the words of two patents may be very different if they are on different topics, but the visual signatures may be fairly similar, due to similar graphic elements, font types, shapes and sizes of text blocks, and shapes in the figures. It has been found that evaluating how many print jobs are actual patents, travel request forms, and financial reports is informative about the paper-intensive processes that occur in the company.

In one exemplary embodiment, the labeled print job data can be used to identify parameters of clusters for the clustering model, which is then used to assign unlabeled print jobs to clusters based on their extracted features.

In another embodiment, the print job clustering system produces clusters of similar print jobs, initially roughly grouping, for example, print jobs related to similar basic types of documents, e.g. forms, letters, emails, presentations, etc. These initial clusters can then be refined, validated and associated to the corresponding tasks using the labels or other information input from the users who issued the jobs. Crowd sourcing information from the users, lets them annotate a small portion of their print jobs indicating to which task they correspond and also why the document was required to be in paper form. The system then uses the collected information to improve the clustering and this process can iterate until the results obtained are consistent. This approach has the advantage of requiring only a limited number of annotations and thus only a limited number of users annotating their jobs. The number of annotations needed may depend on the number of different tasks within the organization, the variability of corresponding documents involved, and on the quality of the clustering mechanism.

Once the clustering parameters are learned, unlabeled print jobs can be automatically assigned to clusters based on their print job representations alone.

Consumable Usage (S114)

In computing the amount of consumable used in a given task, the analysis component 36 of the system may compute the sum of the sheets of paper used or pages printed in both the task-labeled and the unlabeled print jobs in a respective cluster. As will be appreciated, other methods may be used for computing consumable usage which take into account a number of factors may be used, as described, for example in U.S. Pub. No. 20120033250. In computing the amount of consumable associated with a given constraint, the analysis component 36 of the system may compute, for each of the set of constraints, the sum of sheets/printed pages in the print jobs in a given cluster which have been labeled with that constraint. The analysis component may infer that the unlabeled print jobs in the cluster would have the same constraint distribution as the labeled print jobs, in order to provide an amount of the consumable for each constraint for the entire set of labeled and unlabeled print jobs in the cluster.

Identification/Annotation, Representation and Aggregation. (S104, S118)

The system is based on continuous tracking of the user's print consumption, as developed within PAT. Through the aggregation of total print volume, and of volumes for print jobs with particular types, attributes or print settings, it analyses the user's print history and can thus highlight typical printing patterns over time, e.g., high proportion of color versus black and white printing. The system thus detects and puts forward typical or atypical peaks regarding a work period, e.g., typically high.

Consumption on the end of the month or week. Such patterns represent an area where employee annotations can be particularly valuable. Indeed, they hint towards recurrent work processes where improvements are most needed and will have the biggest impact.

Drawing upon this pattern identification, the system confronts the user with his patterns in order to engage him, through its central element, the "note", to comment and explain these patterns, to contextualize, and to share these notes through a structured user dashboard with his peers. The system finally assembles all the notes in a group dashboard featuring various aggregation and management options. In the following we illustrate how the system provides these functionalities and how the user interacts with the system.

Creating a note

Recognizing the particular employee role and knowledge about print issues, the system proposes two different ways to create a note: on-the-fly and a posteriori. In the first case, the system stimulates the note creation for a particular print job; in the second case, it confronts the user with a description and visualization of particular observed (possibly problematic) printing patterns allowing him to respond to that indication by annotating the visualized context, for instance explaining why the pattern occurs.

On-the-fly note

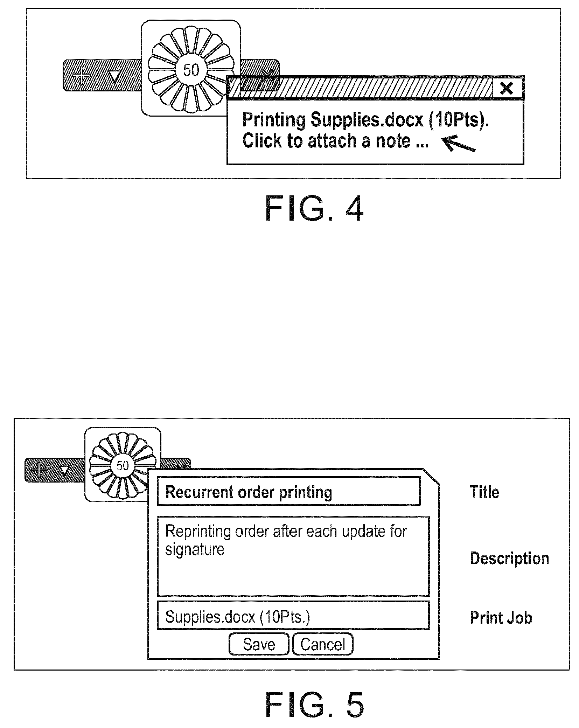

Immediately after issuing a print job, the system prompts the user for an optional note. See FIG. 4.

FIGURE 4 the system prompts the user to take a note on the fly.

If the user chooses to attach a note to the print job, the "note editor" opens. The user provides a title and a short description. When saving the note, the system automatically attaches the actual context, e.g., the user description/title and job attributes (hour/date, color or not, corresponding print job, etc.). The user decides whether he wants to furthermore disclose and attach the print job document content or not. See FIG. 5.

FIGURE 5 taking a note on the fly.

Contextual note

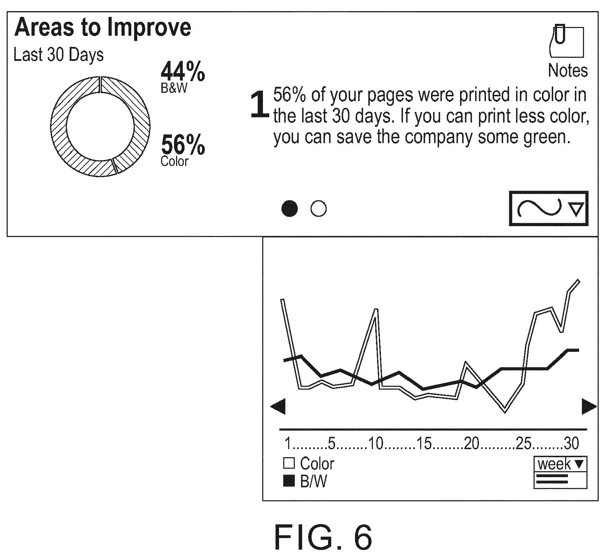

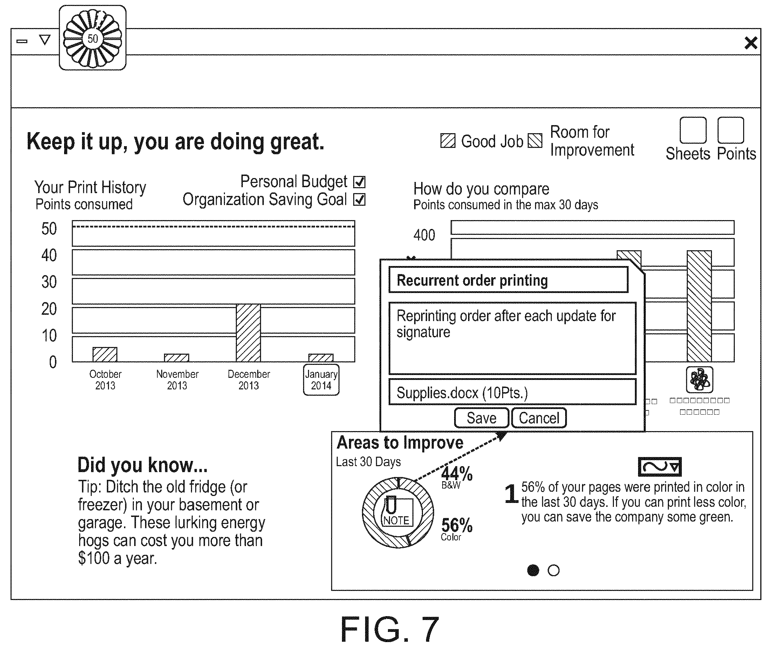

The system also prompts the user to create notes from the visualization/description of his/her print patterns and history aggregated by the system. From within the personal dashboard, the system highlights to the user, through a textual description, his typical or recent and particularly costly consumption patterns regarding various printing aspects (color and black and white, duplex, long documents, etc.). The user can furthermore open an additional view with the associated graphic timeline (FIGS. 6 and 7).

FIGURE 6 Highlighting a particular consumption pattern with the associated timeline.

By pointing out this information to the user, the system stimulates him/her to reflect on such typical patterns and to respond by creating notes to explain them and/or to suggest possible improvements. Here again, once created, the system associates the note with its particular context (highlighted issue and timeframe, user etc.), enabling later grouping of related notes.

FIGURE 7 the user dashboard.

Organization/Management of notes in the personal dashboard.

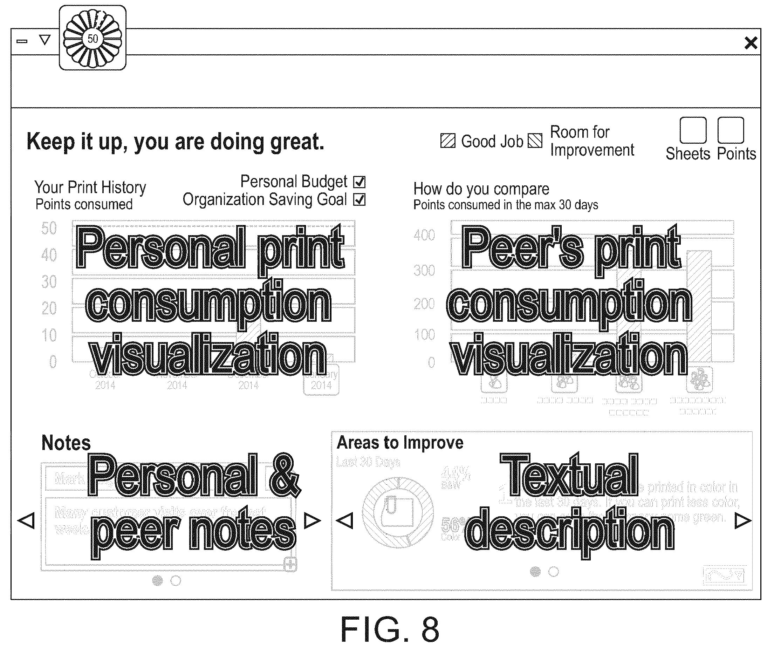

Personal and peer notes are gathered into the user dashboard. There, the note and its contents (title/description) and the context of the notes (print characteristics + related timeframe) appear in two linked areas - respectively bottom-left and bottom-right. The upper part of the dashboard shows the user's personal and his peers' print consumption. (See FIG. 8.)

FIGURE 8. The structure of the user dashboard.

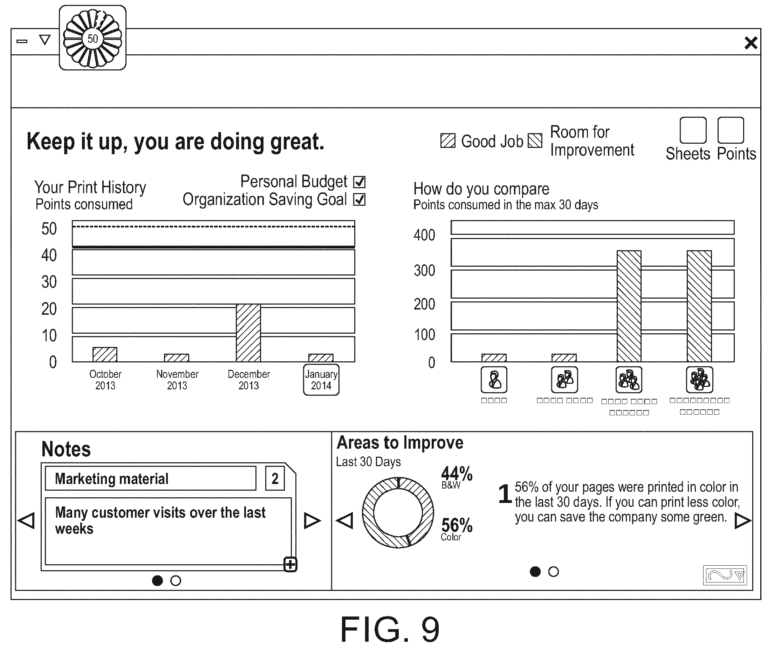

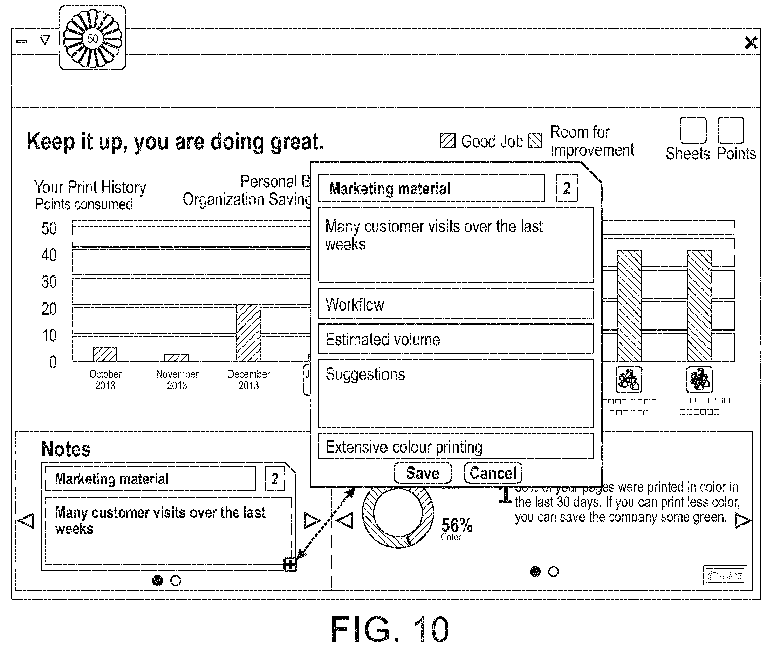

The navigation through the notes can be done either directly through the note pan (bottom-left) or through the textual pattern description areas (bottom-right). The user has the choice to display only his personal notes or also all existing peer notes. Notes are displayed from the most to least supported (see below). The user can then navigate through these notes (bottom-left) and the system will show the corresponding context (textual description and timeframe) in the corresponding area (bottom right): textual description, related timeline and authorship. (See FIG. 9.) The user can also navigate through the pattern description area (bottom-right) and the system then updates the note pan with corresponding notes if any. For peer notes, the user has the possibility to support/vote for them, assuming that he shares the concerned issue. Last but not least, the user can add more details to his existing notes. (See FIG. 10.)

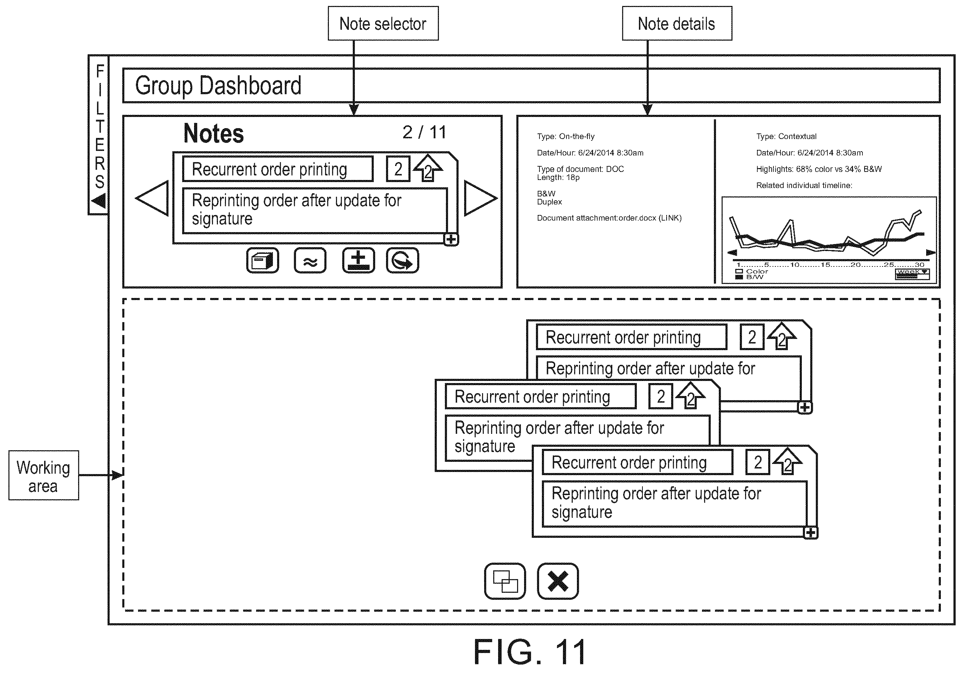

FIGURE 11 the user dashboard including the note pan (bottom left) and the textual pattern descriptions (bottom right). The user can navigate through either of them.

Group dashboard.

To gather and elaborate on all the notes taken by its users, the system provides a group dashboard with various features to organize notes. This group dashboard allows to review and group the notes created during a limited time period and to collectively elaborate solutions and improvements to recurrent print-processes issues.

The group dashboard is composed by three areas. On upper left, the note selector allow to scroll Notes are ordered from most to least supported, i.e., peer votes received. From there, the users, either as a group (or in a prior step for instance only the manager preparing the meeting), review the different notes. On the upper right area, the system shows various information related to the currently selected/visible note. For an "on-the-fly" note, the attributes of the print job are shown and, if chosen by the user, the related document is accessible. Concerning a

consumption pattern note, the system give access to the related context - textual description of the issue and related timeframe, user etc. - from where the note has been created.

Filtering notes

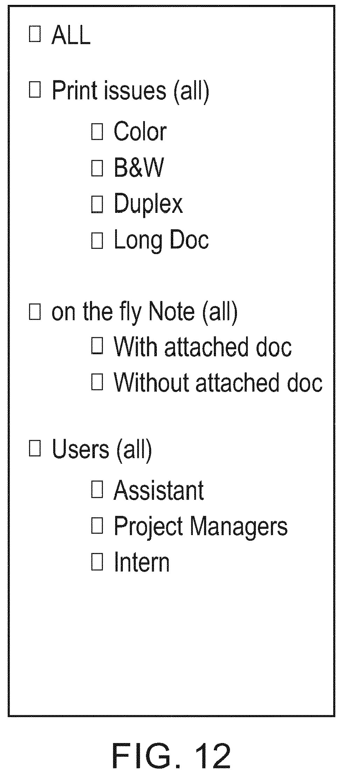

To enable handling an important number of notes and/or to support the exploration and clustering of notes, the group dashboard includes a filtering pan (on its left) (FIG. 12).

From there, the user frames the notes review and limits it to certain types and/or groups of users. It also allows choosing how to order the notes: from most to least supported, chronologically or according to user types. Once filters are selected, only related notes will be presented in the note selector. As an extension, the system can also integrate state of the art clustering methods, based on language processing, as, e.g., those described in U.S. Patent Application No. 13/783,650, filed March 4, 2013, by Willamowski et al., and entitled "SYSTEM AND METHOD FOR HIGHLIGHTING BARRIERS TO REDUCING PAPER USAGE".

Organizing notes.

When reviewing the different notes, users can drag notes into the working area. The objective is to select and group notes addressing similar issues. In the working area, after having selected related notes, users group them into a new aggregated and more general note. As a consequence, the initial regrouped notes disappear from the list, replaced by this new aggregated note.

Through these clustering and note management features, the group dashboard aims at supporting and animating a group discussion about printing issues and possible improvements. Such a meeting can be animated through a systematic review of the notes, ranked by support, in chronological order or by type of employees. For each note, the group then discusses the related issue, also documented within the note details pan, and collectively discusses and elaborates solution/improvements regarding the corresponding typical work processes.

The system and method described herein thus provide an approach to highlight barriers to moving from paper to digital format. This approach combines print job tracking, feature extraction and clustering with user annotation of the print jobs, where users annotate print jobs with information about the task to which they belong and why they have been printed on paper, i.e. why the corresponding task is paper-based and not digital. A benefit of this approach is that it is then easy to detect document types and reasons for printing which create substantial paper volume.

While the exemplary embodiment is directed to a print job workflow in which the print jobs are generated at work stations, scanning and/or fax print job workflows can be similarly annotated. Annotation can be done at the scan/fax devices or afterwards, through the exemplary graphical user interface 70. Combining printing and scanning/faxing workflows may provide more information about paper workflow.

Further, the system and method can be used to evaluate and measure the process of the transition from paper to digital. For example, the change in the clusters over time and the constraints of the annotated print jobs in the clusters can be monitored. This allows the implementation of a paper-reduction procedure to be evaluated. The evaluation may include for first and second sets of the print jobs submitted in respective different time periods, acquiring print job information, computing print job representations, providing for and receiving user-annotations, clustering the print jobs, and generating of a representation of the set of print jobs, and comparing the representation for the second set of print jobs with the representation for the first set of print jobs. For example, the method may be used to determine whether the paper-usage corresponding to a specific task decreases once eReader solutions have been put in place.

The exemplary system and method profit from the willingness of print job submitters to annotate the documents, which is complemented with print job clustering and additional crowd sourced annotation as needed to complete the understanding of the tasks, the corresponding print jobs and the motivations for printing.

Some portions of the detailed description herein are presented in terms of algorithms and symbolic representations of operations on data bits performed by conventional computer components, including a central processing unit (CPU), memory storage devices for the CPU, and connected display devices. These algorithmic descriptions and representations are the means used by those skilled in the data processing arts to most effectively convey the substance of their work to others skilled in the art. An algorithm is generally perceived as a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be understood, however, that all of these and similar terms are to be associated with the appropriate physical quantities and are merely convenient labels applied to these quantities. Unless specifically stated otherwise, as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The exemplary embodiment also relates to an apparatus for performing the operations discussed herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general-purpose systems may be used with programs in accordance with the teachings herein, or it may prove convenient to construct more specialized apparatus to perform the methods described herein. The structure for a variety of these systems is apparent from the description above. In addition, the exemplary embodiment is not described with reference to any particular programming language. It will be appreciated that a variety of programming languages may be used to implement the teachings of the exemplary embodiment as described herein.

A machine-readable medium includes any mechanism for storing or transmitting information in a form readable by a machine (e.g., a computer). For instance, a machine-readable medium includes read only memory ("ROM"); random access memory ("RAM"); magnetic disk storage media; optical storage media; flash memory devices; and electrical, optical, acoustical or other form of propagated signals (e.g., carrier waves, infrared signals, digital signals, etc.), just to mention a few examples.

The methods illustrated throughout the specification, may be implemented in a computer program product that may be executed on a computer. The computer program product may comprise a non-transitory computer-readable recording medium on which a control program is recorded, such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other tangible medium from which a computer can read and use.

Alternatively, the method may be implemented in transitory media, such as a transmittable carrier wave in which the control program is embodied as a data signal using transmission media, such as acoustic or light waves, such as those generated during radio wave and infrared data communications, and the like.

It will be appreciated that variants of the above-disclosed and other features and functions, or alternatives thereof, may be combined into many other different systems or applications. Various presently unforeseen or unanticipated alternatives, modifications, variations or improvements therein may be subsequently made by those skilled in the art which are also intended to be encompassed by the following claims.

**Claims**

1. A method for identifying constraints on reducing consumable usage comprising:

   acquiring print job information for a set of print jobs submitted for printing by a set of users, each print job including a document to be printed;
   generating a print job contextual representation for each of the print jobs;
   providing for user-annotation of the submitted print jobs with a user-annotated note expressing a reason for printing the print job;
   receiving user-annotations for at least some of the submitted print jobs; and
   generating a user dashboard for each of the set of users, the user dashboard displaying the user's print consumption history, the set of users print consumption history and one or more received user-annotated notes for the set of users,
   wherein the generating a print job contextual representation, providing for user-annotations of a note, receiving user-annotated notes, and generating a user dashboard is performed with a computer processor.

2. The method of claim 1, wherein the computing of the print job contextual representation for each of the print jobs is based on features extracted from the print job information including extracting features selected from a group including:

   user ID;
   print job submission time;
   document title;
   document length;
   print job type;
   textual content features;
   visual content features; and
   page coverage features.

3. The method of claim 2, wherein the features include visual features, the computing of the print job contextual representation including extracting low-level features from patches of a page of the document of the print job and generating a statistical representation of the page based on the extracted low-level features.

4. The method of claim 2, wherein the features include textual features, the computing of the print job contextual representation includes words from the print job and generating a statistical representation of the print job based on the extracted words.

5. The method of claim 1, wherein the generating of the representation of the set of print jobs comprises generating a graphical representation.

6. The method of claim 1, further comprising evaluating a transition from paper to digital documents, comprising: for first and second sets of the print jobs, performing the acquiring print job information, generating the print job contextual representation, providing for user-annotation, receiving user-annotations, and comparing the representation for the second set of print jobs with the representation for the first set of print jobs.

7. The method of claim 6, wherein the information for the second set of print jobs is acquired for print jobs submitted after submission of the first set of print jobs.

8. The method of claim 1, wherein the acquiring print job information for a set of print jobs submitted for printing comprises acquiring print logs from a plurality of printers for the submitted print jobs.

9. A system for identifying constraints on reducing consumable usage comprising:

a job tracking component for acquiring print job information for a set of print jobs submitted for printing by a set of users, each print job including a document to be printed;
a print job contextual representation generation component for generating a print job contextual representation for each of the print jobs;
an annotation component for receiving user-annotations for at least some of the submitted print jobs, the user user-annotations including a user-annotated note expressing a reason for printing the print job;
an analysis component for generating a representation of the set of print jobs which represents reasons for printing of print jobs based on the users' annotations;
a user dashboard component for generating a user dashboard for each of the set of users, the user dashboard displaying the user's print consumption history, the set of user's print consumption history and one or more user annotated notes for the set of users; and
a processor which implements the job tracking component, print job contextual representation annotation component, analysis component, and user dashboard component.

10. A method for identifying constraints on reducing consumable usage comprising:

acquiring print job information for a set of print jobs submitted for printing by a set of users, each print job comprising a document to be printed;
computing a print job representation for each of the print jobs based on features extracted from the print job information, the features including a statistical representation of low-level features extracted from patches of a page of the document;
receiving user-annotations for at least some of the submitted print jobs whereby submitted print jobs are annotated with a user annotated note expressing a reason for printing the print job;
partitioning the print jobs into clusters based on the print job representations and annotations; and
generating a representation of the set of print jobs which represents reasons for printing of print jobs in at least one of the clusters, based on the users' c annotations,
wherein the computing of the print job representation, receiving user-annotations, partitioning the print jobs, and generating of the representation of the set of print jobs are performed with a computer processor.

FIG. 1

FIG. 2

S100 — ( START )

S102 — ACQUIRE PRINT JOB INFORMATION FOR SET OF PRINT JOBS SUBMITTED BY A SET OF USERS

S104 — PROVIDE FOR THE USERS TO ANNOTATE SOME OF THE PRINT JOBS TO IDENTIFY CONSTRAINTS ON USE OF DIGITAL DOCUMENTS

S106 — RECEIVE USER ANNOTATIONS

S108 — COMPUTE PRINT JOB REPRESENTATION BASED ON FEATURES EXTRACTED FROM ACQUIRED PRINT JOB INFORMATION

S114 — COMPUTE CONSUMABLE USAGE FOR PRINT JOBS

S116 — GENERATE INFORMATION BASED ON THE PRINT JOBS AND THE IDENTIFIED CONSTRAINTS

S118 — OUTPUT INFORMATION VIA A USER DASHBOARD AND/OR A GROUP DASHBOARD

S120 — ( END )

# FIG. 3

FIG. 4

FIG. 5

## Areas to Improve
Last 30 Days

**44%**
B&W

**56%**
Color

Notes

**1** 56% of your pages were printed in color in the last 30 days. If you can print less color, you can save the company some green.

1........5........10........15........20.........25........30

☐ Color
■ B/W

week ▼

FIG. 6

EP 3 051 474 A1

**Keep it up, you are doing great.**

☑ Good Job ☒ Room for Improvement

Sheets Points

Your Print History
Points consumed

Personal Budget ☑
Organization Saving Goal ☑

How do you compare
Points consumed in the max 30 days

50
40
30
20
10
0

October 2013  November 2013  December 2013  January 2014

400

**Recurrent order printing**

Reprinting order after each update for signature

Supplies.docx (10Pts.)

Save   Cancel

**Did you know...**
Tip: Ditch the old fridge (or freezer) in your basement or garage. These lurking energy hogs can cost you more than $100 a year.

**Areas to Improve**
Last 30 Days

44%
B&W

NOTE

56%
Color

1 56% of your pages were printed in color in the last 30 days. If you can print less color, you can save the company some green.

● ○

# FIG. 7

EP 3 051 474 A1

**Keep it up, you are doing great.**

◲ Good Job ◳ Room for Improvement

☐ ☐
Sheets Points

Your Print History
Points consumed

Personal Budget ☑
Organization Saving Goal ☑

How do you compare
Points consumed in the max 30 days

50
40
30
20
10
0

**Personal print consumption visualization**

2014    2014    2014    2014

400
300
200
100
0

**Peer's print consumption visualization**

**Notes**

**Personal & peer notes**

◁            ▷

**Areas to Improve**

Last 30 Days

44%
B&W

56%
Color

**Textual description**

◁            ▷

FIG. 8

EP 3 051 474 A1

**Keep it up, you are doing great.**

☑ Good Job ☒ Room for Improvement

Sheets Points

Your Print History
Points consumed

Personal Budget ☑
Organization Saving Goal ☑

How do you compare
Points consumed in the max 30 days

50
40
30
20
10
0

October 2013   November 2013   December 2013   January 2014

400
300
200
100
0

**Notes**

| Marketing material | 2 |

Many customer visits over the last weeks

◁ ▷

● ○

**Areas to Improve**
Last 30 Days

44% B&W

56% Color

**1** 56% of your pages were printed in color in the last 30 days. If you can print less color, you can save the company some green.

◁ ▷

● ○

FIG. 9

FIG. 10

EP 3 051 474 A1

FIG. 11

EP 3 051 474 A1

☐ ALL

☐ Print issues (all)

    ☐ Color

    ☐ B&W

    ☐ Duplex

    ☐ Long Doc


☐ on the fly Note (all)

    ☐ With attached doc

    ☐ Without attached doc


☐ Users (all)

    ☐ Assistant

    ☐ Project Managers

    ☐ Intern

# FIG. 12

**Europäisches Patentamt**
**European Patent Office**
**Office européen des brevets**

# EUROPEAN SEARCH REPORT

Application Number

EP 16 15 1158

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical feature(s), namely client and server computers, printers, databases interconnected over a telecommunication network, are therefore considered to be part of the notorious knowledge, for which no documentary evidence is deemed necessary. (see Guidelines for Examination in the European Patent Office, B-VIII, 2.2.1).<br><br>-----  | | INV.<br>G06Q10/10 |
| | | | **TECHNICAL FIELDS SEARCHED     (IPC)**<br><br>G06Q |

The present search report has been drawn up for all claims

| Place of search | Date of completion of the search | Examiner |
|---|---|---|
| The Hague | 26 May 2016 | Marcu, Antoniu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100070521 A
- US 20100082615 A, Stephane Clinchant
- US 20120045134 A, Florent Perronnin
- US 20120076401 A, Jorge Sanchez
- US 20030021481 A
- US 2007005356 A
- US 20070258648 A
- US 20080069456 A
- US 20080240572 A
- US 20080317358 A
- US 20090144033 A
- US 20090208118 A
- US 20100040285 A
- US 20100092084 A
- US 20100098343 A
- US 20100189354 A
- US 20100191743 A
- US 20100226564 A
- US 20100318477 A
- US 20110026831 A
- US 20110040711 A
- US 20110052063 A
- US 20110072012 A
- US 20110091105 A
- US 20110137898 A
- US 20110184950 A
- US 20120143853 A
- US 20120158739 A
- US 20110273739 A
- US 20120033250 A
- US 77402013 A
- US 78365013 A, Willamowski

### Non-patent literature cited in the description

- **O'NEILL et al.** WHEN A LITTLE KNOWLEDGE ISN'T A DANGEROUS THING. *CHI 2011 - Conference on Human Factors in Computing Systems - Vancouver BC, Canada,* 07 May 2011
- **LOWE.** Distinctive image features from scale-invariant keypoints. *IJCV,* 2004, vol. 60
- **PERRONNIN et al.** Fisher kernels on visual vocabularies for image categorization. *CVPR,* 2007
- **JORGE SANCHEZ ; THOMAS MENSINK.** Improving the fisher kernel for large-scale image classification. *in Proc. 11.sup.th European Conference on Computer Vision (ECCV): Part IV,* 2010, 143-156
- **PERRONNIN, F. ; LIU, Y. ; SANCHEZ, J. ; POIRIER, H.** Large-scale image retrieval with compressed fisher vectors. *Proc. of Computer Vision and Pattern Recognition (CVPR),* 2010, 3384-3391
- **JORGE SANCHEZ ; FLORENT PERRONNIN.** High-dimensional signature compression for large-scale image classification. *CVPR,* 2011
- **PERRONNIN, F. ; LIU, Y. ; SANCHEZ, J. ; POIRIER, H.** Large-scale image retrieval with compressed fisher vectors. *Proc. Computer Vision and Pattern Recognition (CVPR),* 2010, 3384-3391
- **SEEGER, M.** Learning with labelled and unlabelled data. *Technical Report), University of Edinburgh,* 2001
- **ZHU, XIAOJIN ; JOHN LAFFERTY ; RONALD ROSENFELD.** Semi-supervised learning with graphs. *Diss. Carnegie Mellon University, Language Technologies Institute, School of Computer Science,* 2005
- **LEE.** Algorithms for nonnegative matrix factorization. *Advances in Neural Information Processing Systems,* 2001, vol. 13, 556-562
- **HOFMANN.** Unsupervised learning by probabilistic latent semantic analysis. *Machine Learning,* 2001, vol. 42 (1/2), 177-196
- **BLEI et al.** Latent dirichlet allocation. *J. Machine Learning Res.,* 2003, vol. 3, 993-1022